# EUROPEAN PATENT APPLICATION

(11) **EP 4 375 808 A1**
(43) Date of publication of application: **29.05.2024**
(21) Application number: 23208301.4
(22) Date of filing: 07.11.2023
(51) Int. Cl.: G06F 3/01, G06F 3/023, G06F 3/0338, G06F 3/0346, G06F 3/0362, G06F 3/038

(54) **CONTENT CONTROL METHOD AND SYSTEM**

(30) Priority: 22.11.2022 GB 202217441
(71) Applicant: Sony Interactive Entertainment Inc., Tokyo 108-0075 (JP)
(72) Inventor: MURPHY, Alan, London, W1F 7LP (GB); ARMSTRONG, Calum, London, W1F 7LP (GB)
(74) Representative: D Young & Co LLP

(57) **Abstract**

There is provided a method of controlling displayed content based on user input. The method comprises receiving one or more user inputs from a peripheral device operated by a user, the user inputs comprising one or more involuntary user inputs; modifying the user inputs to reduce a contribution of the involuntary user inputs; and adapting the displayed content in dependence on the modified user inputs.

## Description

### BACKGROUND OF THE INVENTION

### Field of the invention

The present invention relates to a method and system for controlling displayed content based on user input.

### Description of the Prior Art

Users frequently interact with displayed content by providing inputs using various input devices such as a games controller or a keyboard and mouse. However, users prone to involuntary actions, such as tremors or tics, often find it difficult to operate these input devices and to accurately control the content.

The present invention seeks to mitigate or alleviate these problems.

### SUMMARY OF THE INVENTION

Various aspects and features of the present invention are defined in the appended claims and within the text of the accompanying description and include at least:
- In a first aspect, a method of controlling displayed content based on user input is provided in accordance with claim 1.
- In another aspect, a system for controlling displayed content based on user input is provided in accordance with claim 15.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figure 1 is a schematic diagram of an entertainment system in accordance with embodiments of the present description;
- Figure 2 is a schematic diagram of a peripheral device;
- Figure 3 is a flow diagram of a method for controlling displayed content based on user input;
- Figure 4 is a flow diagram of a method of modifying user inputs;
- Figure 5 is a schematic diagram of an actuator and trigger of the peripheral device of Figure 2.

### DESCRIPTION OF THE EMBODIMENTS

A method and system for controlling displayed content based on user input are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

In an example embodiment of the present invention, a suitable system and/or platform for implementing the methods and techniques herein may be an entertainment device such as the Sony^{®} PlayStation 5^{®} videogame console.

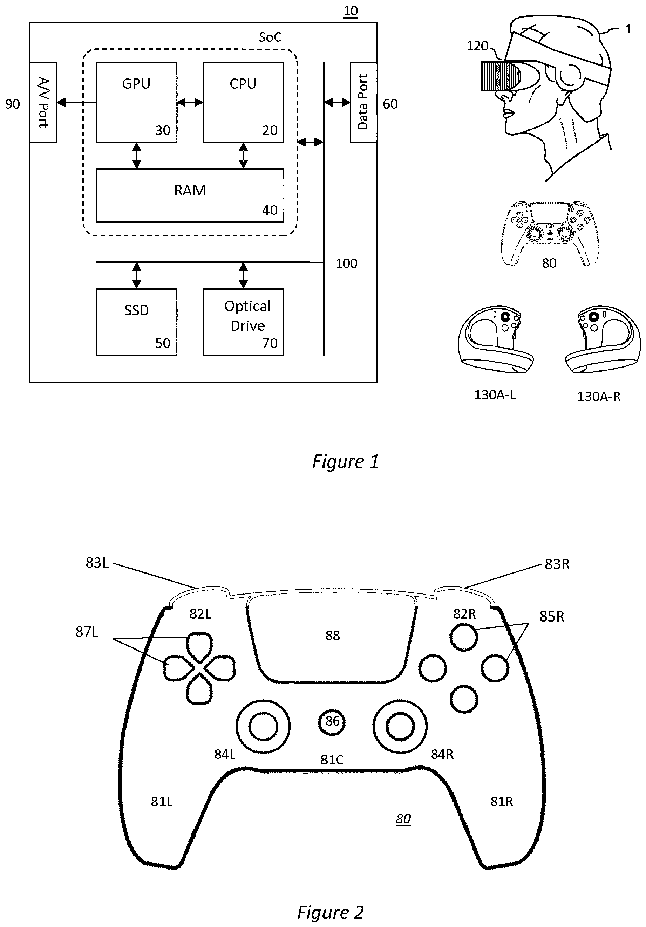

Referring now to the drawings, wherein like reference numerals designate identical or corresponding parts, Figure 1 shows an example of an entertainment system 10 which is a computer or console such as the Sony^{®} PlayStation 5^{®} (PS5).

The entertainment system 10 comprises a central processor 20. This may be a single or multi core processor, for example comprising eight cores as in the PS5. The entertainment system also comprises a graphical processing unit or GPU 30. The GPU can be physically separate to the CPU, or integrated with the CPU as a system on a chip (SoC) as in the PS5.

The entertainment device also comprises RAM 40, and may either have separate RAM for each of the CPU and GPU, or shared RAM as in the PS5. The or each RAM can be physically separate, or integrated as part of an SoC as in the PS5. Further storage is provided by a disk 50, either as an external or internal hard drive, or as an external solid state drive, or an internal solid state drive as in the PS5.

The entertainment device may transmit or receive data via one or more data ports 60, such as a USB port, Ethernet^{®} port, Wi-Fi^{®} port, Bluetooth^{®} port or similar, as appropriate. It may also optionally receive data via an optical drive 70.

Audio/visual outputs from the entertainment device are typically provided through one or more A/V ports 90, or through one or more of the wired or wireless data ports 60.

An example of a device for displaying content (e.g. images) output by the entertainment system is a head mounted display 'HMD' 120, such as the PlayStation VR 2 'PSVR2', worn by a user 1. It will be appreciated that the content may be displayed using various other devices - e.g. using a conventional television display connected to A/V ports 90.

Where components are not integrated, they may be connected as appropriate either by a dedicated data link or via a bus 100.

The user provides interacts with, and provides inputs to, the system typically using one or more peripheral devices (80, 130A), such as the DualSense^{®} controller (80) in the case of the PS5, and/or one or more VR controllers (130A-L,R) in the case of the HMD.

It will be appreciated that the same device may be used to both display content and receive user inputs. For example, a PlayStation Portable (PSP) device may be used to provide both of these functions.

Referring now to Figure 2, a peripheral device may take one of a number of forms. Non-limiting examples include a wand-style controller such as the Sony PlayStation Move ^{®}, a joystick (which may be held freely in the hand or mounted on a fixed mount), a steering wheel (which again may be held freely in the hand or mounted on a fixed mount), or a handheld controller such as the DualSense ^{®} controller 80 shown in Figure 2. References to a peripheral device or the DualSense ^{®} controller herein may be taken to encompass other peripheral devices such as those listed above unless otherwise specified.

Similarly as will be described later herein, some functions of a handheld controller 80 may be performed by a head-mounted display 802, and so references a handheld controller or the DualSense ^{®} controller herein may be taken to encompass a head mounted display as appropriate.

In Figure 2, the DualSense ^{®} controller 80 is illustrated as an example of a handheld controller acting as a peripheral device. Such a controller typically has two handle sections 81L,R and a central body 81C. Various controls are distributed over the controller, typically in local groups. Examples include a left button group 82L, which may comprise directional controls 87L and/or one or more shoulder buttons (e.g. triggers) 83L, and similarly right button group 82R, which comprise function controls 85R and/or one or more shoulder buttons 83R. The controller also includes left and/or right joysticks 84L,R, which may optionally also be operable as buttons by pressing down on them.

The controller (typically in the central portion of the device) may also comprise one or more system buttons 86, which typically cause interaction with an operating system of the entertainment device rather than with a game or other application currently running on it; such buttons may summon a system menu, or allow for recording or sharing of displayed content. Furthermore, the controller may comprise one or more other elements such as a touchpad 88, a light for optical tracking (not shown), a screen (not shown), haptic feedback elements (not shown), and the like.

Each of the controls distributed over the controller may be used by a user to input commands to a device, such as the entertainment system 10, and as such may be referred to as input elements (that is, elements of a peripheral operable to provide an input). Further inputs may also be provided through the sensing of the motion of the controller (for example, using an accelerometer embedded within the controller, or an image-based tracking of the controller), as well as the sensing of audio via a microphone associated with the controller.

Embodiments of the present disclosure relate to systems and methods of controlling displayed content based on user inputs. The user inputs are modified so as to reduce a contribution of involuntary user inputs to control of the content. This can enable more accurate and reliable control of the content for users prone to involuntary actions, such as tremors, and reduce the risk of users inadvertently providing erroneous input. Thus, the control of displayed content may be made more accessible to such users. In some cases, it may also be considered that the longevity of hardware and user safety may be increased through the reduction in potentially damaging involuntary inputs.

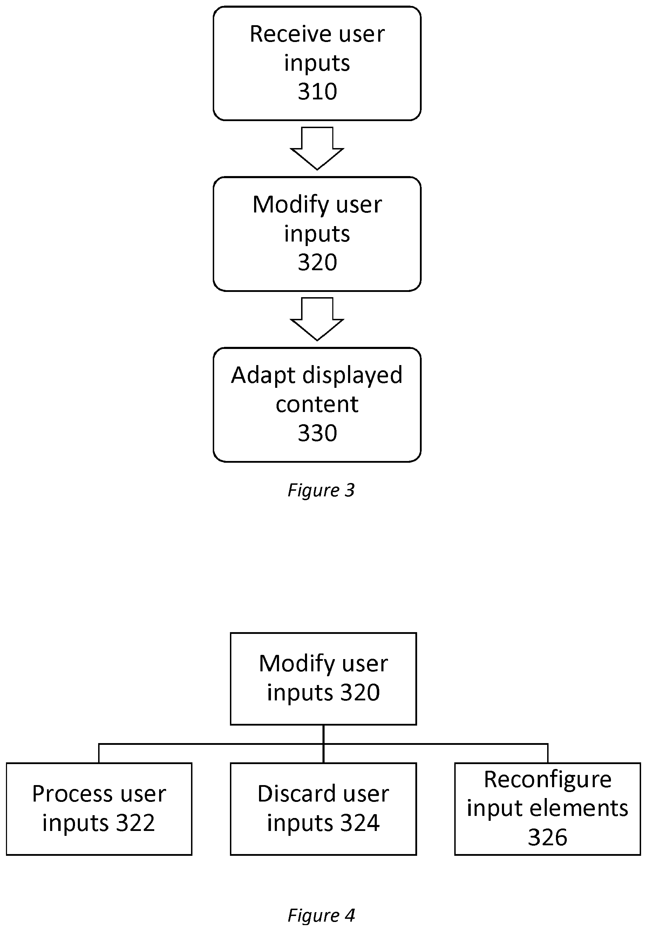

Figure 3 schematically illustrates an example of a method in accordance with one or more embodiments of the present disclosure.

At step 310, one or more user inputs from a peripheral device (for example, the controller 80 or one of VR controllers 130A-L,R) operated by a user are received. The inputs may comprise any suitable inputs for a particular peripheral device; examples include button presses, joystick manipulation, audio inputs, motion inputs (e.g. movements of the controller 80), and/or image inputs (e.g. gaze movements tracked using a camera installed in the HMD 120).

The user inputs received at step 310 comprise one or more involuntary user inputs. As used herein, the term "involuntary user inputs" preferably connotes user inputs caused by involuntary user actions - in other words, user actions that cannot be controlled and/or stopped by the user. Examples of involuntary user actions include tremors, shakes, tics (both motor and vocal), or hiccups. These may be caused by various user ailments such as Tourette syndrome, Parkinson's disease, or essential tremor disorder. The involuntary user actions can cause user inputs that were entirely unintended - e.g. when the user intends to not press any buttons but their tremors cause them to press one or more buttons. In addition, or alternatively, the involuntary user actions can distort intentional user inputs - e.g. when a user intends to provide a small force input (e.g. joystick manipulation) or an input in a given direction, but the user's tic causes them to instead provide a large force input or an input in a different direction. It will be appreciated that any type of user input may comprise involuntary user inputs, including button presses, joystick manipulation, audio inputs, and/or motion inputs.

The inputs may be received over a period of time; in some cases this may be over a single play session (or a portion of a play session), while in others a longer period of time may be considered suitable. For example, inputs may be received over a period of hours, days, weeks, months, years or any other time intervals as appropriate.

At step 320, the user inputs are modified to reduce a contribution of involuntary user inputs. This facilitates control of displayed content (e.g. playing a game using the controller 80) for users suffering from involuntary user actions such as those described above. Reducing the contribution of involuntary user inputs is particularly beneficial for user control of VR content because VR content often needs to be controlled in a precise manner (e.g. using subtle head or arm movements) and its immersive nature amplifies the impact of involuntary user inputs on the user experience which may in some cases (e.g. if a user rapidly swings their head side to side because of shakes) result in motion sickness.

The user inputs may be modified in dependence on several factors. In various embodiments, user inputs may be modified in dependence on one or more of: the magnitude, force, and/or frequency of repetition of user inputs, the content displayed to the user at the time at which the user inputs are received (i.e. the 'current' displayed content), the input element (e.g. button) used to provide the user input, a position of the peripheral device, a sound recording of the user, and/or one or more images of the user; as will be described in further detail below.

Modifying the user inputs at step 320 may comprise identifying one or more involuntary user inputs within the user inputs, and modifying the user inputs to reduce the contribution of the identified involuntary user inputs. This allows identifying and reducing the contribution of involuntary inputs in real-time (i.e. 'live'), e.g. during a user's gameplay session. Thus, the entertainment system 10 can better react to any changes in user input patterns as involuntary user inputs are identified in real-time. For example, the magnitude of a user's tremor may be identified in real-time and the user inputs may be modified at step 320 to negate user inputs of that magnitude. In some cases, the displayed content may be adapted in response to identifying involuntary user inputs. For example, if involuntary user inputs are identified, a game session may be paused and/or a corresponding message may be displayed to the user.

Alternatively, the user inputs may be modified at step 320 in a predetermined way, without identifying the involuntary inputs in real-time. The way in which the user inputs are modified may be determined based on previous interactions with displayed content of the user, and/or a plurality of other users. For example, the entertainment system 10 may identify involuntary user inputs during a user's interaction with the displayed content over an initial period of time (e.g. during an initial calibration process or the first 10 minutes of gameplay), and determine input modifications personalised to the user, which can then be used at step 320 over a longer period of time to reduce a contribution of the involuntary user inputs. Alternatively, data associated with a plurality of users may be analysed to determine appropriate modifications to reduce the contribution of involuntary user inputs - e.g. using machine learning.

Referring to Figure 4, the user inputs may be modified in a variety of ways, and modifying the user inputs at step 320 may comprise one or more of the following steps (alone or in any combination):
- Step 322 - processing the user inputs;
- Step 324 - discarding one or more user inputs based on predetermined conditions; and/or
- Step 326 - reconfiguring input elements of the peripheral device.

A step 322 comprises processing the user inputs to reduce the contribution of the involuntary user inputs. This may include filtering, scaling, and/or smoothing the user inputs.

The user inputs may be filtered to remove user inputs based on their magnitude (otherwise referred to in the art as force, intensity or amplitude). Involuntary user inputs typically have either a relatively small magnitude (e.g. partial button presses caused by tremors or shakes) or a relatively large magnitude (e.g. a motion input - such as a head movement - resulting from a tic). Thus, filtering out user inputs having a magnitude below a first threshold and/or above a second higher threshold allows at least partially negating involuntary user inputs. Filtering a background level of low intensity user inputs and excessively large user inputs reduces their contribution relative to mid-magnitude (and more likely to be purposeful/intentional) user inputs. The first (i.e. lower) threshold may be set by the lowest detectable input magnitude (e.g. the lowest magnitude of a button press on the controller 80 that can be detected by the entertainment dev), or otherwise in any other way. For example, calibration may be used and the user may be asked (e.g. via a displayed message) to depress a controller button (e.g. one of shoulder buttons 83L,R or a button of the VR controller 130A-L) mid-way and hold it steady. Any deviation(s) in user input from this mid-value can then be characterised as an involuntary input, and the magnitude of the deviation(s) can be used to set the first threshold. It will be appreciated that different filters may be applied to different inputs and for different involuntary movements; hence for example a filter with a low magnitude threshold for hand tremors, and a filter with a high magnitude threshold for head movement.

The user inputs may be filtered out only if they are found to repeat (e.g. within a given a time period such as 10 seconds) - this reduces the probability that intentional user inputs are mistakenly filtered out if their magnitude falls within the filtered ranges.

In addition, or alternatively to filtering based on magnitude, the user inputs may be filtered based on the frequencies at which the user inputs repeat. Involuntary user inputs are typically associated with repetitive user actions - for example, Parkinsonian tremors typically repeat at a frequency of around 4 Hz, essential tremors typically repeat at a frequency of around 6 Hz, while orthostatic tremors typically repeat at a frequency of around 16 Hz. Thus, by filtering out user inputs that repeat at (or around) these frequencies, the contribution of the corresponding involuntary user inputs can be reduced or entirely negated.

For example, a band-pass filter may be used to filter out user inputs having a magnitude within a given threshold (e.g. 10%) of one another and repeating within a given frequency range (e.g. between 3 and 5 Hz) to reduce the contribution of tremors caused by a user's Parkinson's disease to their inputs for controlling displayed content. The relevant frequency ranges can be pre-programmed or identified based on frequency analysis of user inputs over a period of time, and/or the user can identify any relevant condition they may have via an interface, and the corresponding frequency range(s) can then be used. Likewise, the threshold for comparing input magnitudes to determine whether an input is repeating may be pre-programmed or identified by analysing user inputs over a period of time.

Alternatively or in addition to filtering, the user inputs may be scaled to compensate for involuntary user inputs. The magnitude, direction and/or duration of the inputs may be scaled. For example, the magnitude of the user inputs may be scaled down, which may allow reducing the contribution of typically lower magnitude involuntary inputs as compared to higher magnitude (and more likely to be purposeful) inputs. The scaling may be non-linear; hence low magnitude and/or high magnitude inputs outside predetermined thresholds may be scaled down, or scaled down more than other inputs. The scaling may be smooth or stepped with magnitude. Alternatively, the user input may scaled in the time-domain - e.g. a user input lasting 1 second may be extended to 2 seconds or shortened to half a second.

In some cases, users may find it difficult to provide inputs in the intended direction. For example, users providing motion inputs or inputs using a joystick 84L,R may involuntarily provide inputs skewed in one direction (e.g. to their left). Step 322 may comprise scaling the direction of the inputs (e.g. applying a 20 degree offset clockwise) to compensate for such involuntary input direction skewing. Such skewing may be evaluated for example during a tutorial or calibration exercise that requests directional inputs.

The user inputs may also, or alternatively, be smoothed. Smoothing is particularly applicable to situations in which users provide continuous input - for example, to cause a controlled character in a game to sprint, the user may depress the trigger button 83L,R for extended periods of time. For users suffering from involuntary actions, providing such a continuous input may be difficult and their tremors may cause gaps in the input. By applying a smoothing function to the user inputs this can be counteracted.

Smoothing is also applicable to motion inputs provided by a user, which can be particularly affected by involuntary user actions. For example, user tremors typically cause larger variations in motion inputs than in button presses. Applying a smoothing function to user motion inputs can therefore allow isolating the motion intended by the user and reducing the contribution of any involuntary motion.

A step 324 comprises discarding one or more user inputs based on predetermined condition(s). The conditions are aimed at discarding inputs when they are considered likely to be involuntary - for example, when no user input is expected or a user input of a different magnitude (i.e. larger or smaller than that received) is expected, the received user inputs may be discarded as likely being involuntary. A user input may be discarded in dependence on the content displayed at the time the input was received/detected and/or the input element (e.g. button on the controller 80) used to provide the input; as described in further detail below. For example, if the user is playing a game using the HMD 120 and provides a large magnitude motion input (e.g. by suddenly swinging their head) above a predetermined expected input magnitude threshold for the current displayed content, the input may be discarded.

It will be appreciated that discarding user inputs based on predetermined conditions encompasses both blacklisting inputs (where the default is to accept inputs and only inputs meeting the predetermined conditions are discarded) and whitelisting inputs (where the default is to discard inputs and only inputs meeting the predetermined conditions are accepted). In the latter case, for example, user button presses on controller 80 may only be accepted if the controller 80 is arranged (i.e. held by the user) in a particular orientation (e.g. rotated beyond a particular angle around the horizontal axis) and/or if a specified 'whitelist' button (e.g. one of function controls 85R) is depressed by the user - the controller 80 orientation and the 'whitelist' button thereby providing gating signals for accepting user inputs. Discarding inputs based on whitelisting allows users particularly prone to involuntary actions (e.g. suffering from very frequent tremors) to provide the gating signal when they are in more control of their actions (e.g. when the intensity of tremors is reduced) and so to better control displayed content.

The triggering of one or more of the predetermined conditions may cause user inputs to be discarded over a period of time and/or until a user inputs an override command. For example, the predetermined conditions may be selected to identify a user seizure, upon which all user inputs for the next 2 minutes (or until the user inputs a specific override sequence) are discarded to avoid the user involuntarily controlling the displayed content (and e.g. ruining their game progress) while having a seizure. The entertainment system 10 may further be configured to provide one or more alerts upon triggering of the predetermined conditions. For example, a message may be displayed to the user, and/or an alert may be transmitted to emergency services informing them the user is having a seizure and providing the user's address.

In some cases, one or more user inputs may be discarded based on a further predetermined user input (which acts as the predetermined condition). In this way users can manually indicate (e.g. by pressing two predetermined buttons at once) that they have just performed an involuntary action (e.g. had a tic) and user inputs received over a given period of time before the further user input (i.e. the indication) are discarded as likely being the result of involuntary user actions. For some user inputs, e.g. audio inputs, a lag between receiving the input and adapting the displayed content (or otherwise using the input - e.g. transmitting it to other users) may be provided so that a user can provide the further user input before the involuntary user inputs are used.

A step 326 comprises reconfiguring one or more input elements of the peripheral device used to provide the user inputs. This differs from steps 322 and 324 in that one or more physical changes to the operation of the peripheral (i.e. input) device are implemented. This may include any physical changes as appropriate for a particular input device - examples include varying a level of resistance of a button or other element offered to a user when providing inputs, or modifying the operational range of a button or other element.

Reconfiguring the input elements allows reducing lag associated with modifying the user inputs at step 320 because it does not require additional computation after receipt of the user inputs and, in some cases, the displayed content can be directly adapted based on the received user inputs. Reconfiguring the input elements may also increase the longevity of the peripheral device and user safety because it allows reducing potentially damaging interactions. For example, increasing the resistance of a button to mitigate a user's tic may reduce wear of the button.

Considering modifying the operational range of an input element, in some cases, a physical element may have a dual operation mode (or more than two operation modes) and the relationship between the modes may be modified as appropriate. For instance, a trigger button may act as a variable input for a first level of input by a user and as a button for a second level of input - for instance, a user may depress a trigger to perform a first function and if depressed past a threshold the trigger may 'click' and instead provide a second function comparable to a button input. In such a case, the threshold for generating the second input may be varied to reduce the contribution of involuntary actions. For example, if the user is playing a game in which they frequently provide the first input (e.g. to shoot a gun) but provide the second input only infrequently (e.g. to throw a grenade), the threshold for generating the second input may be increased so that the user is less likely to involuntarily provide the second input when the first (and generally more probable) input was intended.

Alternatively, for an audio input element, modifying the operational range of an input element may include varying the sensitivity of the microphone (or the input may be switched off entirely) when an involuntary user input - e.g. resulting from a tic or hiccups - is expected.

Considering varying a level of resistance of an input element, the resistance to operation of the input elements may be increased for at least a portion of the time when the user interacts with the displayed content. In this way, a resistive force that counteracts the user's involuntary action (e.g. tremor) is applied so that the input element (e.g. button) is not activated, or is less likely to be activated, until a large enough (and more likely to be purposeful) force is applied by the user, hence reducing the contribution of involuntary actions to the inputs.

The resistance to operation may be varied in dependence on the, e.g. determined or expected, magnitude and/or frequency of repetition of the involuntary user inputs. For example, the resistance may be varied proportionally to the magnitude of involuntary user inputs - where if the involuntary inputs are expected to have a higher magnitude the resistance is increased to a greater degree than if the expected magnitude is lower. The resistance may be set in proportion to the involuntary user inputs with the highest magnitude - e.g. for users suffering from various ailments each causing involuntary inputs of different magnitudes, the resistance may be set in proportion to the involuntary user input of the highest magnitude.

In some cases, the resistance to operation may be varied over time - for example, increased or reduced depending on the content currently displayed to the user (e.g. what the user is currently doing in a game), as described in further detail below. On a smaller time-scale, the resistance to operation may be varied to match the frequency of the involuntary user actions/inputs - e.g. the resistance may be increased every 0.2 seconds to match the 5 Hz frequency of repetition of a user's tremor, and reduced to a default level in-between the tremors. This can allow the input elements to provide a perceptually consistent resistance to the user despite involuntary movement by the user.

It will be appreciated that some, or all, of the input elements of the peripheral device may be reconfigured as part of step 326, and the reconfiguration may differ between input elements. For example, the resistance to operation of element(s) particularly affected by a user's involuntary actions (e.g. a right shoulder button / trigger 83R for a user with tremors in their index fingers) may be increased more than for other elements(s) that are less affected (e.g. the joystick 84L for a user with no, or lesser, tremors in their thumbs).

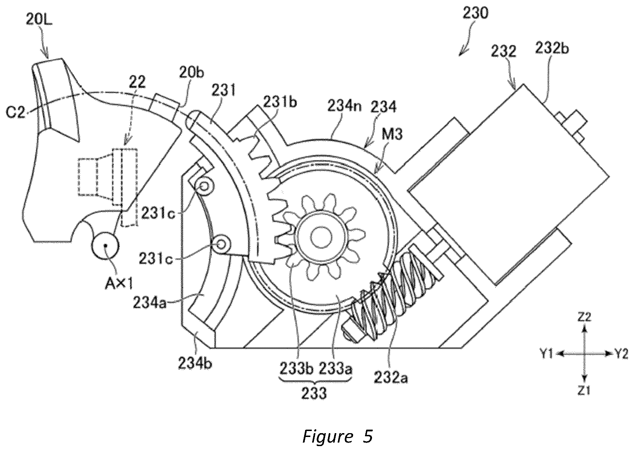

Figure 5 schematically illustrates a trigger mechanism associated with a button of a games controller such as a shoulder button 83L,R of controller 80 shown in Figures 1 and 2. This mechanism is considered to be entirely exemplary, with the teachings provided in this disclosure being applicable to any other input elements as appropriate. The mechanism of Figure 4 is simply provided as an example of an arrangement in which a reconfiguration of a peripheral (or at least one input element associated with the peripheral) may be performed so as to provide a materially different physical interaction for a user.

In this Figure, an actuator 230 has a button drive member 231 that contacts the contact portion 20b of the manipulation button (trigger) 20L, and moves the manipulation button 20L. In addition, the actuator 230 has an electric motor 232 (in a housing 232b) which is a driving source to move the button drive member 231, the transmission mechanism M3 that transmits motive power of the electric motor 232 to the button drive member 231, and a case 234 (comprising at least a first part 234n) holding the electric motor 232, the transmission mechanism M3 and the button drive member 231. The electric motor 232 is positioned opposite to the manipulation button 20L, with the button drive member 231 and the transmission mechanism M3 being sandwiched between the electric motor 232 and the manipulation button 20L.

The button drive member 231 of the actuator 230 is movable along an arc C2 centred on the rotation centre Ax1. The button drive member 231 further comprises a plurality of projecting contact portions 231c which can be arranged in grooves to guide the motion of the button drive member 231. The button drive member 231 applies, to the manipulation button 20L, a force in an opposite direction to a direction in which the user pushes the manipulation button 20L. In this manner, a resistance to the operation by the user may be provided by providing this force at the time of operation. By varying the magnitude of this force, by varying the output of the electric motor 232 that drives the button drive member 231, the resistance to operation can be varied to enable an easier or more difficult operation by a user (that is, an operation that requires a lesser or greater force to be applied by the user).

When the manipulation button 20L is at its initial position, a gap may be provided between the button drive member 231 and the contact portion 20b of the manipulation button 20L, or the button drive member 231 and the contact portion 20b may be in contact with each other. As illustrated in Figure 5, when the manipulation button 20L is seen in the direction of the rotation centre line Ax1, the contact portion 20b is positioned opposite to the rotation centre line Ax1, with a sensor 22 being sandwiched between the contact portion 20b and the rotation centre line Ax1.

The actuator 230 has guides 234a, formed on the case 234, that define the direction in which the button drive member 231 moves due to the presence of the projecting contact portions 231c. The button drive member 231 is slidable along the guides 234a while staying in contact with the manipulation button 20L. The guides 234a are formed such that the button drive member 231 slides along the arc C2. Accordingly, the button drive member 231 slides in the same direction as the direction in which the contact portion 20b moves. The actuator 230 also includes a sensor 235 for sensing the position of the button drive member 231 (i.e., the rotation position of the electric motor 232).

The button drive member 231 may have a movable range larger than the movable range of the manipulation button 20L. In Figure 5, the maximally-pressed position of the manipulation button 20L is defined by the presence of a stopper 234b so as to prevent further pressing motion. In a state where the manipulation button 20L is at its maximally-pressed position, the button drive member 231 is further slidable in the direction away from the contact portion 20b (in other words, it can be retracted further). By moving the button drive member 231 into this retracted state, the manipulation button 20L can be manipulated in a manner free from a reaction force from the actuator 230L due to the lack of contact. Furthermore, in a state where the manipulation button 20L is at its maximally-pressed position, the button drive member 231 can be caused to hit the manipulation button 20L after the button drive member 231 is accelerated by the electric motor 232. As a result, the impact can be transmitted to the manipulation button 20L more easily, and this impact can provide haptic feedback to the user.

The transmission mechanism M3 includes a gear 233 including a large diameter gear 233a, and a small diameter gear 233b having a diameter smaller than that of the large diameter gear 233a. A rack 231b is formed on the button drive member 231, and the small diameter gear 233b functions as a pinion gear that engages with the rack 231b. In addition, a gear 232a which engages with the large diameter gear 233a is attached to the rotation axis of the electric motor 232. The structure of the transmission mechanism M3 is not limited to that in the example of the actuator 230. For example, the gear 232a attached to the electric motor 232 may engage with a gear of the button drive member 231 directly.

The above description of Figure 5 provides an example of a functional arrangement that can be used in embodiments of the present disclosure. In particular, it is noted that the electric motor 232 can be controlled so as to modify the motive force that is generated and in turn applied to the manipulation button 20L. By reducing the output of the electric motor 232 (for instance, by reducing a current provided to the electric motor 232), the force applied to the manipulation button 20L can be reduced; thereby reducing the force required by a user to depress the manipulation button 20L, and subsequently increasing the amount of the operational range of the manipulation button 20L that is able to be used for a given value of input force (in other words, reducing the resistance to operation of button 20L). The inverse also holds true, in that by increasing the output of the electric motor 232 the force applied to the manipulation button 20L can be increased and therefore the force required for the user to utilise the same operational range is increased (in other words, the resistance to operation of button 20L is increased).

Of course, in other arrangements a similar effect may be obtained through other means - in the case in which a number of different gears of varying sizes is provided, a different gear for transferring the force may be selected so as to vary the force applied to the manipulation member. Similarly, elastic or deformable elements (such as an inflatable cushion-type element or bands with varying lengths) may be provided to similarly vary the amount of resistive force applied to the manipulation member.

This is an example of a reconfiguration of an input element (the manipulation button 20L) of a peripheral device so as to modify user inputs to reduce a contribution of involuntary user inputs. Such a modification to the operation of the electric motor 232 may be implemented by the peripheral itself (such as by an integrated processing unit) or by an associated device such as the entertainment system 10.

In some cases, the input elements may be reconfigured remotely by the entertainment device 10. For example, in the case of the manipulation button 20L, its resistance can be varied by transmitting a corresponding control signal from the entertainment system 10 to control the electric motor 232.

Alternatively, or in addition, the input elements may be reconfigured manually by replacing parts of the controller 80. For example, the controller 80 may be provided with swappable resilient components in the joysticks 84L,R (or swappable manipulation buttons 20L) of varying stiffness. In this way, the resistance to operation by a user of the joystick (or manipulation button 20L) can be varied by swapping one resilient component for another with a different stiffness.

Referring back to Figure 4, at any one or more of steps 322-326, the user inputs may be modified in dependence on one or more of: the magnitude, force, and/or frequency of repetition of user inputs, the content displayed to the user at the time at which a user input is received (i.e. the current displayed content), the input element (e.g. button) associated with (i.e. used to provide) the user input, a position of the peripheral device, a sound recording of the user, and/or one or more images of the user, in any appropriate combination. Modifications based on these parameters have been described above, but further details are provided below.

Considering the current displayed content, this, along with any of the other listed parameters, can be used to determine whether, and/or how to, modify the user inputs. Modifying the displayed content in dependence on the current displayed content allows more accurately mitigating for involuntary inputs, and assists in both further reducing the contribution of involuntary inputs and avoiding inadvertently modifying intentional user inputs. It also helps reduce the computational cost of modifying the user inputs at step 320. For example, by increasing the resistance of input elements prior to a game scene that is expected to result in involuntary user inputs or modifying the user inputs at step 320 only for some current displayed content, the amount of computational processing required to mitigate for involuntary inputs is reduced. Accordingly, the lag between the receipt of user input at step 310 and adapting the displayed content at step 330 is also reduced thereby providing an improved user experience.

Some displayed content - for example, flashing lights or frightening imagery (e.g. a user-controller character in a game being at a high altitude or enemies suddenly appearing in a game) - was found by the inventors to trigger involuntary user actions (and therefore involuntary inputs). When a user is controlling displayed content (e.g. playing a game), the entertainment system 10 may expect involuntary user inputs after display of the triggering content (e.g. a high altitude scene or a cut-scene with flashing lights). The user inputs may then be modified in a particular way during, as well as for a certain time before and/or after, the display of the triggering content. For example, at step 326, the resistance of input elements may be increased to a higher level shortly before and during the triggering content, and decreased to a standard level after the content is changed. As a further example, at step 322, the threshold for filtering user inputs may be varied to account for the triggering content - e.g., the threshold magnitude over which user inputs are filtered out may be reduced to increase sensitivity to involuntary inputs, or the frequency range for filtering out user inputs can be adjusted (by mid-point and/or range) to negate particular expected involuntary user inputs (e.g. different frequencies of tremors may be expected for different displayed content).

For some displayed content (e.g., during cut-scenes in a game), no (or specific) user input may be expected, and any user input (or any user input different to that expected) may be discarded at step 324 as involuntary. For example, if the user is playing a game using the HMD 120 and provides a large magnitude motion input (e.g. by suddenly swinging their head as a result of a physical/motion tic) above a predetermined expected input magnitude threshold for the current displayed content, the input may be discarded. Optionally, inputs characteristic of involuntary actions at such times may also be used to fine tune detection of the involuntary motions of the particular user, as they in turn are unlikely to be mixed with intentional actions during these periods and hence are likely to be clean examples of the unintended signals. Hence for example the frequency of a tremor may be initially calibrated if detected when a user is watching an opening cut-scene, for example.

Conversely, if a user input that is expected for the displayed content is provided, any modification of the user input may be overridden and the user input not modified. For example, if a user is playing a game and, for the current displayed content, would typically repeatedly press one of the function controls 85R for the controlled character to run faster, the game may be controlled based on the unmodified inputs from the function controls 85R even if the inputs exhibit properties (e.g. in terms of magnitude and/or frequency of repetition) of involuntary user inputs. This reduces the chances that intentional user inputs are mistakenly modified only because they match some properties of involuntary user inputs.

Considering the input element associated with the user input, different modifications may be made to a user input depending on the input element used to provide the input. For instance, a different frequency range and/or different threshold magnitude for filtering inputs at step 322 may be used for different input elements. For example, when a user is playing a shooting game, inputs provided by function buttons 85R may be filtered to remove inputs repeating at between 3 and 5 Hz to reduce a contribution of Parkinsonian tremors, but inputs provided by shoulder button / trigger 83R may not be filtered in this way because the trigger 83R corresponds to a 'shoot' input which, when provided intentionally, is likely to fall within the 3-5Hz range. Thus, this helps further reducing the chances that intentional user inputs are mistakenly modified only because they match some properties of involuntary user inputs.

Each user may also suffer from different involuntary user actions that affect different input elements of the peripheral device. For example, some users may have tremors only in their index fingers (or only in their thumbs) - in which case, only inputs provided using shoulder buttons 83L,R (or joysticks 84L,R) may be modified at step 320 to negate involuntary user inputs, with inputs provided using other input elements not being modified at step 320 to help avoid modifying intentional user inputs and save computation cost.

Considering the position of the peripheral, sound recording of the user, and images of the user, these may be used to further assist in identifying involuntary user inputs. This information may be used to detect when user shakes or any other involuntary user action is taking place, in which case the user inputs may be modified as described elsewhere herein. For example, the position of the peripheral may be used to pick up overall tremor of a user (in addition to any tremor at the fingers/fingertips on of the user that are in contact with the buttons on controller 80) to help with identifying involuntary inputs. Sound information may also be used to detect involuntary user actions - for example, predetermined sound patterns associated with user shakes may be stored and if a similar sound pattern is detected using a microphone on the controller 80 then a determination may be made that the user is experiencing shakes and the user inputs modified as described elsewhere herein. Likewise, image data may be used identify involuntary user actions - for example, detecting eye twitching of the user (e.g. based on image data obtained using camera in the HMD 120) may be used as an indicator that the user is experiencing tremors or a tic.

It will be appreciated that a different device may be used for detecting involuntary user inputs than that used to receive the user inputs (which inputs are subsequently modified). For example, as described elsewhere herein, a camera may be used to detect involuntary user inputs based on which inputs received using the controller 80 may be modified to reduce the contribution of involuntary user inputs.

In some cases, a user input may be associated with multiple functions for controlling the displayed content, and modifying the user inputs at step 320 may comprise negating, or reducing the contribution of, an involuntary user input differently for different control functions. For example, in a VR game, a user's head movement may be used for both head tracking (i.e. as an input for determining which part of the VR environment is presented to the user) and as a control input for the game (e.g. where a user may nod or shake their head to respond to an in-game character). In this case, if an involuntary user input is detected (e.g. the user suddenly swings their head to one side because of a tic), the input may be modified (e.g. discarded) as a control input (e.g. not registered as a user shaking their head) but accepted unmodified, or differently modified (e.g. smoothed), for head tracking purposes so as not to induce motion sickness for the user.

At step 330, the displayed content is adapted in dependence on the modified user inputs. The content may be displayed using any appropriate device, such as the HMD 120 or a conventional television display connected to A/V ports 90 of the entertainment device 10.

Adapting the content based on user inputs modified to mitigate for involuntary user inputs allows users prone to involuntary actions to better control the content and makes interaction with the content more accessible to such users. For example, for a user experiencing tremors while playing a game, the input modification step 320 reduces the contribution of the tremors to the user's inputs, and the user is able to play the game in a more controller manner that is less affected by erroneous involuntary inputs.

It will be appreciated that, while the present invention has been described with primary reference to users playing games, the invention is equally applicable to any other displayed content controlled by a user. For example, the present invention can be applied to user control of content displayed on a personal computer using any appropriate input/output device such as a keyboard or mouse. User involuntary actions, such as tremors, may likewise cause erroneous inputs from these input/output devices and the present invention allows mitigating for these involuntary actions.

It will also be appreciated that any suitable user inputs may be modified using the techniques described herein to reduce a contribution of involuntary user inputs. While the foregoing description primarily refers to button and motion inputs, the described techniques could equally be applied to any other suitable user input.

For example, the present invention may be used to mitigate for involuntary sounds - such as those caused by vocal tics or hiccups - within a user's sound input (e.g. provided using a microphone in the controller 80). For sound inputs, the step 322 may comprise filtering sound inputs repeating at certain frequencies (e.g. to mitigate for hiccups) or with magnitudes above a given threshold (e.g. to mitigate for typically high-volume vocal tics such as those caused by Tourette's syndrome).

For sound inputs, the step 324 may comprise discarding sound inputs based on a whitelist and/or blacklist of expected user inputs. Considering the whitelist, expected intentional user inputs, optionally different for various current displayed contents, may be stored, and the sound input may be discarded if it does not match any of these expected intentional inputs. The expected intentional user inputs may, for example, comprise typical phrases used by users when communicating in a multi-player game. Considering the blacklist, expected involuntary inputs, again optionally different for various current displayed contents, may be stored, and the sound input may be discarded if it matches any of these expected involuntary inputs. The expected involuntary user inputs may, for example, comprise typical sounds caused by user tics or hiccups. The whitelist and/or blacklist may personalized to each user. For example, the user may be able to pre-record one or more of their typical involuntary sounds (e.g. tics), or the user may be able to manually flag involuntary sounds after they occur, and the entertainment system 10 may be configured to mitigate for these specific sounds. The matching between user inputs and expected user inputs may be performed in a variety of ways. For example, the sound input may be converted into the frequency-domain and compared to expected sounds using any appropriate technique such as by computing the cross-correlation between the sounds in the spatial and frequency domains. Alternatively, or in addition, user sound inputs may be converted to text and compared to expected user inputs by computing the string distance (e.g. the Hamming distance) between the texts. It will be appreciated that the matching may be based on a threshold similarity - e.g. a sound input may be discarded if the Hamming distance between its corresponding text and an expected involuntary input is below a threshold.

For sound inputs, the step 326 may comprise temporarily disabling (e.g. muting) the input element used to provide the sound input (e.g. a microphone on the controller 80).

In some cases, user sentiment may also be determined based on the user sound input, and the user inputs may be modified at step 320 in dependence on this sentiment.

Referring back to Figure 3, in a summary embodiment of the present invention a method of controlling displayed content based on user input comprises the following steps.

A step 310 comprises receiving one or more user inputs from a peripheral device operated by a user, the user inputs comprising one or more involuntary user inputs, as described elsewhere herein.

A step 320 comprises modifying the user inputs to reduce a contribution of the involuntary user inputs, as described elsewhere herein.

A step 330 comprises adapting the displayed content in dependence on the modified user inputs, as described elsewhere herein.

It will be apparent to a person skilled in the art that variations in the above method corresponding to operation of the various embodiments of the method and/or apparatus as described and claimed herein are considered within the scope of the present disclosure, including but not limited to that:
- the step of modifying the user inputs comprises reconfiguring one or more input elements of the peripheral device, as described elsewhere herein;
   - in this case, optionally reconfiguring one or more input elements of the peripheral device comprises varying a resistance to operation of one or more input elements, as described elsewhere herein;
      ▪ where, optionally varying the resistance to operation of one or more input elements comprises varying the resistance in dependence on, preferably proportionally to, a magnitude of one or more of the involuntary user inputs, as described elsewhere herein;
      ▪ where, optionally varying the resistance to operation of one or more input elements comprises periodically varying the resistance in dependence on, preferably to match, a frequency of repetition of the involuntary user inputs, as described elsewhere herein;
      ▪ where, optionally varying the resistance to operation of one or more input elements comprises increasing the resistance, as described elsewhere herein;
   - in this case, optionally reconfiguring one or more input elements of the peripheral device comprises transmitting a control signal to the peripheral device to reconfigure at least one input element, as described elsewhere herein;
   - similarly in this case, optionally reconfiguring one or more input elements of the peripheral device comprises replacing at least one input element, as described elsewhere herein;
- the step of modifying the user inputs comprises discarding at least one user input based on one or more predetermined conditions, as described elsewhere herein;
- the step of modifying the user inputs comprises processing the user inputs to reduce a contribution of the involuntary user inputs, wherein the processing comprises at least one of: filtering, scaling, and/or smoothing the user inputs, as described elsewhere herein;
- the step of modifying the user inputs comprises identifying one or more involuntary user inputs within the user inputs, and modifying the user inputs to reduce a contribution of the identified involuntary user inputs, as described elsewhere herein;
   - in this case, optionally the method further comprises adapting the displayed content in response to identifying one or more involuntary inputs within the user inputs, as described elsewhere herein;
- the step of modifying the user inputs to reduce a contribution of the involuntary user inputs is in dependence on (i.e. the user inputs are modified in dependence on) at least one of magnitude, and frequency of repetition of the user inputs, as described elsewhere herein;
   - in this case, optionally the step of modifying the user inputs is in dependence on at least one of: its (i.e. a user input's) magnitude being below a first threshold, its magnitude being above a second threshold, and/or its frequency of repetition being within a predetermined range, as described elsewhere herein;
- the step of modifying the user inputs to reduce a contribution of the involuntary user inputs is in dependence on the current displayed content, as described elsewhere herein;
   - in this case, optionally the user inputs are modified (i.e. the step of modifying the user inputs to reduce a contribution of the involuntary user inputs is performed) in response, or prior, to the current displayed content being a first displayed content, as described elsewhere herein;
   - in this case, optionally the step of modifying of the user inputs is in dependence on a magnitude and/or frequency of repetition of expected involuntary user inputs associated with the current displayed content, as described elsewhere herein;
      ▪ where, optionally the step of modifying the user inputs comprises varying the resistance to operation of one or more input elements of the peripheral device in dependence on a magnitude and/or frequency of repetition of expected involuntary user inputs associated with the current displayed content, as described elsewhere herein;
   - in this case, optionally, in response to the current displayed content being a second displayed content, the step of adapting the displayed content comprises adapting the displayed content in dependence on one or more unmodified user inputs associated with the second displayed content, as described elsewhere herein;
- the step of modifying the user inputs to reduce a contribution of the involuntary user inputs is in dependence on input elements of the peripheral device used to provide the user inputs, as described elsewhere herein;
   - in this case, optionally for at least one input element, the step of adapting the displayed content comprises adapting the displayed content in dependence on one or more unmodified user inputs associated with the at least one input element, as described elsewhere herein;
- the step of modifying the user inputs is in dependence on one or more of: a position of the peripheral user device, a sound recording of the user, and/or one or more images of the user, as described elsewhere herein;
- the displayed content is displayed using the peripheral user device, as described elsewhere herein;
- the displayed content is virtual reality (VR) content, as described elsewhere herein; and
- the displayed content is part of a videogame, as described elsewhere herein.

It will be appreciated that the above methods may be carried out on conventional hardware suitably adapted as applicable by software instruction or by the inclusion or substitution of dedicated hardware.

Thus the required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

Hence referring back to Figure 1, an example conventional device may be the entertainment system 10, in the form of a Sony^{®} PlayStation 5^{®} videogame console. Accordingly, a system 10 for controlling displayed content based on user input, may comprise the following.

An input processor (for example CPU 20) configured (for example by suitable software instruction) to receive one or more user inputs from a peripheral device operated by a user, the user inputs comprising one or more involuntary user inputs. A modification processor (for example CPU 20) configured (for example by suitable software instruction) to modify the user inputs to reduce a contribution of the involuntary user inputs. And, an output processor (for example CPU 20) configured (for example by suitable software instruction) to adapt the displayed content in dependence on the modified user inputs.

In a further embodiment of the present invention, there is provided a method of modifying user inputs, the method comprising: receiving one or more user inputs from a peripheral device operated by a user, the user inputs comprising one or more involuntary user inputs; and modifying the user inputs to reduce a contribution of the involuntary user inputs. The method may comprise any features of the method of controlling displayed content based on user input as described elsewhere herein.

In a further embodiment of the present invention, there is provided a kit of parts for a peripheral device. The kit of parts comprises two or more input elements (e.g. two or more shoulder buttons 83L,R) for a peripheral device (e.g. controller 80), where each input element is configured to provide a different resistance to operation by a user, as described elsewhere herein. The kit of parts further comprises a peripheral device (e.g. controller 80) configured to interchangeably receive each of the two or more input elements, as described elsewhere herein.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. A method of controlling displayed content based on user input, the method comprising:
receiving one or more user inputs from a peripheral device operated by a user, the user inputs comprising one or more involuntary user inputs;
modifying the user inputs to reduce a contribution of the involuntary user inputs; and
adapting the displayed content in dependence on the modified user inputs.

2. The method of claim 1, wherein modifying the user inputs comprises reconfiguring one or more input elements of the peripheral device.

3. The method of claim 2, wherein reconfiguring one or more input elements of the peripheral device comprises varying a resistance to operation of one or more input elements.

4. The method of claim 3, wherein varying the resistance to operation of one or more input elements comprises varying the resistance in dependence on, preferably proportionally to, a magnitude of one or more of the involuntary user inputs.

5. The method of claim 3 or 4, wherein varying the resistance to operation of one or more input elements comprises periodically varying the resistance in dependence on, preferably to match, a frequency of repetition of the involuntary user inputs.

6. The method of any preceding claim, wherein modifying the user inputs comprises discarding at least one user input based on one or more predetermined conditions.

7. The method of any preceding claim, wherein modifying the user inputs comprises processing the user inputs to reduce a contribution of the involuntary user inputs, wherein the processing comprises at least one of: filtering, scaling, and/or smoothing the user inputs.

8. The method of any preceding claim, wherein modifying the user inputs comprises identifying one or more involuntary user inputs within the user inputs, and modifying the user inputs to reduce a contribution of the identified involuntary user inputs.

9. The method of any preceding claim, wherein modifying the user inputs to reduce a contribution of the involuntary user inputs is in dependence on at least one of magnitude, and frequency of repetition of the user inputs.

10. The method of any preceding claim, wherein modifying the user inputs to reduce a contribution of the involuntary user inputs is in dependence on the current displayed content.

11. The method of claim 10, wherein the user inputs are modified in response, or prior, to the current displayed content being a first displayed content.

12. The method of claim 10 or 11, wherein modifying the user inputs is in dependence on a magnitude and/or frequency of repetition of expected involuntary user inputs associated with the current displayed content.

13. The method of any preceding claim, wherein modifying the user inputs to reduce a contribution of the involuntary user inputs is in dependence on input elements of the peripheral device used to provide the user inputs.

14. A computer program comprising computer executable instructions adapted to cause a computer system to perform the method of any one of the preceding claims.

15. A system for controlling displayed content based on user input, the system comprising:
an input processor configured to receive one or more user inputs from a peripheral device operated by a user, the user inputs comprising one or more involuntary user inputs;
a modification processor configured to modify the user inputs to reduce a contribution of the involuntary user inputs; and
an output processor configured to adapt the displayed content in dependence on the modified user inputs.
